# EUROPÄISCHE PATENTSCHRIFT

(11) **EP 1 084 528 B1**
(45) Veröffentlichungstag und Bekanntmachung des Hinweises auf die Patenterteilung: **30.06.2004**
(21) Anmeldenummer: 99932660.6
(22) Anmeldetag: 07.05.1999
(51) Int. Cl.: H01S 3/10, G02B 21/00

(54) **VERFAHREN ZUM BETRIEB EINER LASERLICHTQUELLE**
METHOD FOR OPERATING A LASER LIGHT SOURCE
PROCEDE DE FONCTIONNEMENT D'UNE SOURCE DE LUMIERE LASER

(30) Priorität: 08.05.1998 DE 19820575
(43) Veröffentlichungstag der Anmeldung: 21.03.2001
(73) Patentinhaber: Leica Microsystems Heidelberg GmbH, 69120 Heidelberg (DE)
(72) Erfinder: ENGELHARDT, Johann, D-76669 Bad Schönborn (DE); ZAPF, Thomas, D-67346 Speyer (DE); HUG, Bill, Pasadena, CA 91104 (US)
(74) Vertreter: Reichert, Werner F., Dr.
(86) Internationale Anmeldenummer: PCT/DE1999/001386
(87) Internationale Veröffentlichungsnummer: WO 1999/059228

(56) Entgegenhaltungen:
- EP-A- 0 507 628
- JP-A- 3 268 023
- JP-A- 6 051 219
- US-A- 4 240 064
- US-A- 5 155 325
- US-A- 5 280 162
- US-A- 5 724 458
- PATENT ABSTRACTS OF JAPAN vol. 008, no. 185 (E-262), 24. August 1984 (1984-08-24) -& JP 59 075760 A (FUJITSU KK), 28. April 1984 (1984-04-28)
- PATENT ABSTRACTS OF JAPAN vol. 015, no. 435 (P-1272), 6. November 1991 (1991-11-06) -& JP 03 181910 A (SUMITOMO CEMENT CO LTD), 7. August 1991 (1991-08-07)
- PATENT ABSTRACTS OF JAPAN vol. 017, no. 427 (M-1459), 9. August 1993 (1993-08-09) & JP 05 092289 A (MATSUSHITA ELECTRIC IND CO LTD), 16. April 1993 (1993-04-16)
- "CONFOCAL LASER MICROSCOPES SEE A WIDER FIELD OF APPLICATION" LASER FOCUS WORLD,US,PENNWELL PUBLISHING, TULSA, Bd. 30, Nr. 2, Seite 83-86 XP000432108 ISSN: 0740-2511

## Beschreibung

Die Erfindung betrifft ein Verfahren zum Betrieb einer Laserlichtquelle, insbesondere zum Scannen in einem konfokalen Laserscanmikroskop, wobei die Laserlichtquelle über ein Netzteil mit Strom versorgt wird. Des weiteren betrifft die Erfindung ein Verfahren zum Betrieb einer gepulsten Laserlichtquelle.

Bei einem konfokalen Laserscanmikroskop bzw. im dortigen Laserscanner ist die Laserlichtquelle mit einem Preis im Bereich zwischen DM 10.000,00 und DM 20.000,00 die teuerste Komponente, wobei die Lebensdauer der Laserlichtquelle wenige tausend Stunden beträgt. Aus dem Stand der Technik ist bereits eine Maßnahme bekannt, die Lebensdauer der Laser zu verlängern. So hat man bislang bereits eine sogenannte Standby-Schaltung realisiert, durch deren Aktivierung der Laser in einen minimalen Stromzustand versetzt wird, bei der die Gasentladung des Lasers gerade noch nicht erlischt. Wird der Laser nicht gebraucht und wird daher der Standby-Modus aktiviert, sind Ein-/Ausschaltvorgänge nicht erforderlich. Der Röhrenstrom wird kurz vor der Benutzung, so beispielsweise nach einer Bearbeitungspause, wieder auf das benötigte Betriebsniveau gebracht.

Bei dem herkömmlichen Gebrauch eines Konfokalmikroskops ist die effektive Strahlnutzzeit, d.h. die effektive Aufnahmezeit, während der das Laserlicht tatsächlich bei voller Leistung gebraucht wird, äußerst kurz. Der größte Anteil der gesamten Betriebszeit eines solchen Systems - meist mehr als 90% - wird zur Vorbereitung des Experiments und zur Nachbereitung der Daten benötigt, während die Laserlichtquelle in der Regel eingeschaltet bleibt. Dies bedeutet, daß die Laserlichtquelle den größten Teil der Einschaltzeit überhaupt nicht genutzt wird, nämlich lebensdauerzehrend betrieben wird.

Des weiteren ist bekannt, daß bei Gaslasern, so beispielsweise bei Argon- oder Krypton-Lasern, die Lebensdauer exponentiell mit der Zunahme des Röhrenstromes abnimmt.

Der vorliegenden Erfindung liegt nun die Aufgabe zugrunde, die Lebensdauer der Laserlichtquelle durch optimierten Betrieb zu verlängern und dabei die Betriebskosten insgesamt zu reduzieren.

Das erfindungsgemäße Verfahren der gattungsgemäßen Art löst die voranstehende Aufgabe durch die Merkmale des nebengeordneten Patentanspruchs 1. Danach ist ein Verfahren zum Betrieb einer Laserlichtquelle dadurch gekennzeichnet, daß die Laserlichtquelle im wesentlichen nur während der Strahlnutzzeit, vorzugsweise während der Datenaufnahme, mit der erforderlichen Leistung betrieben wird.

Im Falle der Verwendung einer pulsierenden Laserlichtquelle wird die Strahlnutzzeit, insbesondere die Datenaufnahme, im wesentlichen mit dem Emissionszyklus der Laserlichtquelle synchronisiert.

Anspruch 6 definiert ein konfokales Laserscanmikroskop.

Erfindungsgemäß ist erkannt worden, daß insbesondere bei konfokalen Laserscanmikroskopen die Laserlichtquelle die meiste Zeit ihres Betriebes überhaupt nicht genutzt wird. Dazu gehören nicht nur die echten Arbeitspausen, in deren Verlauf ein herkömmlicher Standby-Modus gewählt werden kann. Vielmehr werden Laserlichtquellen bei der Datenaufnahme auch während des Zeilenzyklus (z.B. in x-Richtung) oder während des Framezyklus (beispielsweise in y-Richtung) nur zeitweise genutzt. So ist davon auszugehen, daß während des Zeilenzyklus (in x-Richtung) lediglich 25% des Zeitbedarfs des gesamten Zyklus für die x-Abtastung in eine Richtung erforderlich ist. Aufgrund einer gewissen Spiegelträgheit sind für die jeweilige Richtungsumkehr des Scanners abermals etwa 25% der Gesamtzeit zu veranschlagen. Gleiches gilt für das Rückführen des Scanners auf der x-Achse sowie für die abermalige Umkehr vor dem erneuten Vorlauf bzw. Scannen.

Würde im Rahmen eines solchen Zeilenzyklus lediglich in einer Richtung entlang der x-Achse detektiert werden, würde die Laserlichtquelle nur zu 25% ihrer gesamten Betriebszeit genutzt werden. Des weiteren ist davon auszugehen, daß der Framezyklus zur Rückführung in die Ausgangsposition des Laserstrahls abermals eine erhebliche Zeit benötigt, wobei auch hier etwa 25% der Gesamtzeit anzusetzen sind. Folglich würde die echte Strahlnutzzeit bezogen auf den Zeilenzyklus und den überlagerten Framezyklus 25% (bzw. 50% bei einer Arbeitsweise in beide Richtungen entlang der x-Achse) von 75% (der nutzbaren Zeit in y-Richtung) betragen.

Unter Zugrundelegung der voranstehenden Betrachtung ist in erfindungsgemäßer Weise erkannt worden, daß man den Röhrenstrom des Lasers immer dann reduzieren sollte und vor allem auch kann, wenn dies unter Berücksichtigung der echten Strahlnutzzeit möglich ist. Im optimalen Fall ist der Laser ausschließlich während der Zeit - vollständig - bestromt, während der die Datenaufnahme im Falle der Anwendung in einem konfokalen Laserscanmikroskop stattfindet. Mit anderen Worten wird während der Rücklaufzeiten des Scanners in x-y-z-Richtung der Laser zumindest auf einen wesentlich geringeren Strom geschaltet. Jedenfalls wird die Laserlichtquelle im wesentlichen nur während der Strahlnutzzeit, vorzugsweise während der Datenaufnahme, mit der erforderlichen Leistung betrieben.

Laser der herkömmlichen Art sind jedoch insoweit aufwendig und daher teuer, als sie bei erheblicher Baugröße eine ganz besondere Kühlung erfordern. Dies ist bei sogenannten "DEEP-UV-Lasern" nicht der Fall, wobei solche Laser mit hinreichender Leistung mit den Wellenlängen 224, 248, 260, 270 oder 280 nm in Form von Dampfgaslasern (HeAg, NeCu, HeAu) zur Verfügung stehen. Diese Laser sind jedoch in einer für die konfokale Laserscanmikroskopie nachteiligen Weise gepulst und haben dabei üblicherweise einen Duty-Cycle von 50% bishin zu nur wenigen Prozent, so beispielsweise 5%. Auch die Repetitionsrate der Pulse ist sehr gering, so daß diese Laser bislang als Lichtquelle für ein Laserscanmikroskop nicht in Frage gekommen sind.

Alternativ zu dem voranstehend erörterten Verfahren ist es - im Rahmen des Patentanspruches 3 - nun auch möglich, solche DEEP-UV-Laser bei der konfokalen Laserscanmikroskopie zu verwenden, indem nämlich die Strahlnutzzeit, insbesondere die Datenaufnahme, im wesentlichen mit dem Emissionszyklus der Laserlichtquelle synchronisiert wird. Mit anderen Worten wird der Duty-Cycle des Scanners an den Duty-Cycle der Laserlichtquelle angepaßt.

Nachfolgendes Zahlenbeispiel liefert die Relevanz einer solchen Anwendung:

Bei einer PRF (Pulse Repetition Frequency) von 500 Hz (= 2 ms) und einem Duty-Cycle von 5% (= 0,1 ms) könnte eine Anpassung an einen Scanner für die x-Richtung mit einer Zeilenfrequenz von 8 kHz (= 125 µs Periodendauer) folgendermaßen erfolgen: einer der beiden zum Scannen verwendbaren "linearen" Bereiche beträgt ein Viertel der Periodendauer, also ungefähr 30 µs Innerhalb des Duty-Cycles des Lasers von 0,1 ms (100 µs) können somit ca. 2 Zeilen gescannt werden. Voraussetzung hierfür ist jedoch, daß der Scanner kurz nach Beginn des Lichtpulses sich am Beginn eines "linearen" Scanbereichs befindet und die erste Zeile scannen kann. Wenn der Scanner in y-Richtung während diesem Duty-Cycle ebenfalls scannt, wird auch beim Rücklauf in x-Richtung eine weitere Zeile gescannt, da das Laserlicht noch "angeschaltet" ist. Ein x-Scanner mit einer geringeren Frequenz (beispielsweise 4 kHz) kann dann bei geeigneter Synchronisation nur eine Zeile pro Duty-Cycle aufnehmen. Jedoch kann dies bei schwachen Fluoreszenzsignalen vorteilhaft für das gemessene Signal-zu-Rausch-Verhältnis sein.

Somit wird nur während des Duty-Cycles des Lasers gescannt und für den Rest der Zeit ist der Aufnahmeprozeß "idle".

Ungeachtet der voranstehend erörterten alternativen Ausgestaltungen des erfindungsgemäßen Verfahrens kann die Laserleistung grundsätzlich außerhalb der Strahlnutzzeit, d.h. dann, wenn die volle Laserleistung nicht erforderlich ist, reduziert werden. Eine solche Reduktion der Laserleistung außerhalb der Strahlnutzzeit, d.h. eine Baufschlagung der Laserlichtquelle mit einem geringeren Strom, kann durch herkömmliches Dimmen der Laserlichtquelle erreicht werden, sofern sich der Lasertyp dazu eignet. Im Konkreten könnte die Leistung der Laserlichtquelle auf etwa 20% reduziert werden, wobei im Rahmen einer besonders vorteilhaften Ausgestaltung die Laserleistung außerhalb der Strahlnutzzeit so stark reduziert wird, daß die Laserlichtquelle gerade noch brennt.

Ebenso ist es denkbar, daß der Laser nur während der Strahlnutzzeit bestromt ist bzw. außerhalb der Strahlnutzzeit zumindest kurzfristig abgeschaltet wird. Zum erneuten Zünden der Laserlichtquelle könnte eine besondere Zündhilfe hinzugezogen werden, um nämlich möglichst schnell wieder einen nutzbaren Laserstrahl zu erhalten.

Zur Realisierung der erfindungsgemäßen Maßnahme könnte das Lasernetzteil über ein vom Scanner zur Verfügung gestelltes Synchronisationssignal gesteuert werden. Durch dieses Synchronisationssignal wird die Laseremission - durch schnelle Synchronisation - auf den Duty-Cycle des Scanners optimal angepaßt, so daß die Laserlichtquelle nur dann voll bestromt ist bzw. nur dann auf vollem Leistungsniveau arbeitet, wenn eine Datenaufnahme im Rahmen der "echten" Strahlnutzzeit erfolgt.

Ebenso ist es denkbar, das voranstehend erörterte Verfahren zur Beschaltung bzw. zur Modulation einer Laserlichtquelle derart auszulegen, daß Laser gleicher Leistung im modulierten Betrieb mit höheren Leistungen betrieben werden, ohne diese dabei thermisch zu überlasten. Letztendlich treten hier Leistungsspitzen auf, die einen derart modulierten Betrieb gerade noch zulassen. Dabei ist es sogar möglich, bei einem kleinen luftgekühlten Laser den Strom über eine doch relativ kurze Datenaufnahmezeit einer Zeile hinweg auf ein Niveau zu heben, wo auch UV-Linien zu lasern beginnen. Die Anforderung an das Laserkühlsystem sind dabei im Vergleich zu einem Dauerbetrieb auf höchstem Leistungsniveau wesentlich geringer.

Sofern die Laserlichtquelle zum Scannen in einem konfokalen Laserscanmikroskop dient, könnte die voll bestromte Strahlnutzzeit durch die Datenaufnahme während vorzugsweise mäanderförmiger Zeilenzyklen definiert sein. Insoweit würde die Probe mäanderförmig abgerastert bzw. gescannt werden. Dabei ist es insbesondere bei Verwendung einer gepulsten Laserlichtquelle möglich, die Datenaufnahme in jeder n-ten Zeile, vorzugsweise in jeder zweiten Zeile, stattfinden zu lassen, um nämlich den Duty-Cycle der Laserlichtquelle vollständig.ausnutzen zu können. Insoweit würde ausschließlich während des Duty-Cycles des Lasers gescannt werden, und zwar ungeachtet der Tatsache, wie viele Zeilen außerhalb des Duty-Cycle der Laserlichtquelle gefahren werden.

Schließlich ist es auch denkbar, den Rücklauf des Scanners über vorzugsweise mäanderförmige Zeilenzyklen vorzunehmen, um nämlich die eigentliche Rücklaufzeit im Rahmen des Framezyklus faktisch zu minimieren. Insoweit gelten die gleichen Ausführungen wie bei dem zuvor beschriebenen Zeilenzyklus in x-Richtung.

Es gibt nun verschiedene Möglichkeiten, die Lehre der vorliegenden Erfindung in vorteilhafter Weise auszugestalten und weiterzubilden. Dazu ist einerseits auf die den nebengeordneten Patentansprüchen 1 und 6 nachgeordneten Ansprüche, andererseits auf die nachfolgende Erläuterung des erfindungsgemäßen Verfahrens anhand der Zeichnung zu verweisen. In Verbindung mit der Erläuterung des erfindungsgemäßen Verfahrens werden auch vorteilhafte Ausführungen erläutert. In der Zeichnung zeigt
- Fig. 1: in schematischer Darstellung, symbolisch, das erfindungsgemäße Verfahren,
- Fig. 2: in schematischer Darstellung einen Zeilenzyklus in x-Richtung
und
- Fig. 3: in schematischer Darstellung einen Framezyklus in y-Richtung.

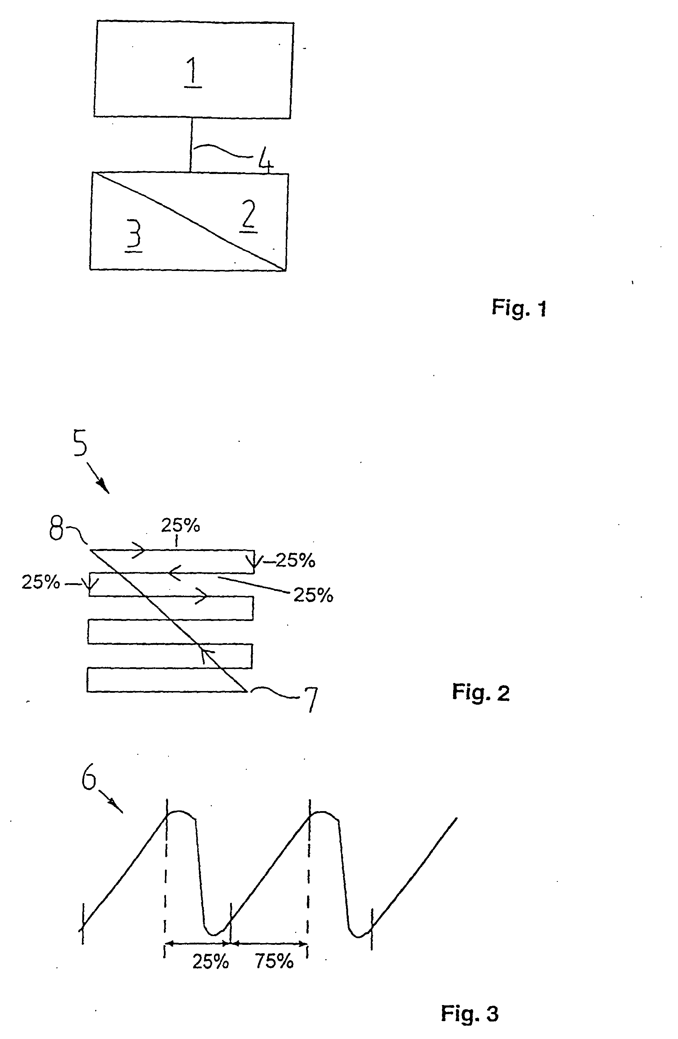

Fig. 1 zeigt mittels eines Blockdiagramms die grundsätzliche Funktionsweise des erfindungsgemäßen Verfahrens zum Betrieb einer Laserlichtquelle, wobei der Scanner 1 und die Stromversorgung 2 der Laserlichtquelle 3 synchronisiert sind. Die Synchronisation ist mit dem Bezugszeichen 4 gekennzeichnet.

Durch die Synchronisation 4 wird erreicht, daß die Laserlichtquelle 3 im wesentlichen nur während der Strahlnutzzeit, d.h. vorzugsweise während der Datenaufnahme im Falle der Anwendung bei einem konfokalen Laserscanmikroskop, mit der erforderlichen Leistung betrieben bzw. mit dem erforderlichen Strom beaufschlagt wird.

Fig. 2 zeigt einen Zeilenzyklus 5 in x-Richtung, wobei das Scannen in x-Richtung - je Zeile - bei dem hier gewählten Ausführungsbeispiel 25% der Gesamtzeit des Zeilenzyklus beansprucht. Die Richtungsumkehr beansprucht aufgrund der Trägheit des verwendeten Spiegels ebenfalls 25% der Gesamtzeit des Zeilenzyklus. Gleiches gilt für die Zeilenabtastung in umgekehrter Richtung und die sich anschließende abermalige Umkehr in die eigentliche Scanrichtung (x-Richtung).

Fig. 2 macht besonders deutlich, daß im Falle der Datenaufnahme in nur eine Richtung (x-Richtung) - ohne Nutzung der Richtungsumkehr - nur 25% des Zeilenzyklus zur Datenaufnahme als Strahlnutzzeit bzw. zur Datenaufnahme genutzt werden. Sofern die Laserlichtquelle ausschließlich in der tatsächlichen Strahlnutzzeit, d.h. zur Datenaufnahme, mit der erforderlichen Leistung betrieben wird, könnte man bei Reduzierung der Leistung außerhalb der Strahlnutzzeit erhebliche Energie einsparen und die Lebensdauer der Laserlichtquelle merklich verlängern.

Fig. 3 zeigt den Framezyklus 6 in y-Richtung. Nach dem zeilenweisen, mäanderförmigen Scannen gemäß der Darstellung in Fig. 2 ist es erforderlich, den Scanner von der dort unteren rechten Position 7 in die Ausgangsposition 8 zurückzufahren. Dazu könnte der Scanner diagonal zurückgestellt werden. Dies erfordert etwa 25% der Gesamtdauer des Framezyklus, so daß insoweit 75% des Framezyklus zur tatsächlichen Datenaufnahme genutzt werden können. Dabei sollte der lineare Bereich des in Fig. 3 dargestellten Kurvenverlaufs genutzt werden.

Hinsichtlich weiterer Merkmale wird zur Vermeidung von Wiederholungen auf den allgemeinen Teil der Beschreibung verwiesen.

### Bezugszeichenliste

- 1: Scanner
- 2: Stromversorgung (Laserlichtquelle)
- 3: Laserlichtquelle
- 4: Synchronisation
- 5: Zeilenzyklus
- 6: Framezyklus
- 7: Position des Scanners rechts unten
- 8: Ausgangsposition des Scanners

## Patentansprüche

1. Verfahren zum Betrieb einer Laserlichtquelle (3) in einem konfokalen Laserscanmikroskop, wobei die Laserlichtquelle (3) über ein Netzteil (2) mit Strom versorgt wird, **dadurch gekennzeichnet, dass** die Laserleistung der Laserlichtquelle (3) während der Zeit außerhalb der Datenaufnahme annähernd auf Null reduziert oder kurzfristig abgeschaltet wird und dass zumindest für kurze Nutzungsperioden die Laserlichtquelle (3) mit Überstrom betrieben wird.

2. Verfahren nach Anspruch 1, **dadurch gekennzeichnet, dass** die Laserlichtquelle (3) eine pulsierende laserlichtquelle ist, die einen Emissionszyklus aufweist.

3. Verfahren nach Anspruch 2, **dadurch gekennzeichnet, dass** die Zeit der Datenaufnahme mit dem Emissionszyklus der Laserlichtquelle (3) synchronisiert ist.

4. Verfahren nach Anspruch 1, **dadurch gekennzeichnet, dass** die Zeit der Datenaufnahme mäanderförmige Zeilenzyklen (5) beinhaltet und dass die Datenaufnahme in jeder n-ten Zeile stattfindet.

5. Verfahren nach Anspruch 3, **dadurch gekennzeichnet, dass** ein Scanner (1) vorgesehen ist, der ein Synchronisationssignal zur Verfügung stellt, das das Netzteil (2) steuert.

6. Konfokales Laserscanmikroskop mit einer Laserlichtquelle (3), einem Scanner (1) und einem Netzteil (2), wobei die Laserlichtquelle (3) über ein Netzteil (2) mit Strom versorgt wird, **dadurch gekennzeichnet, dass** die Laserleistung der Laserlichtquelle (3) während der Zeit außerhalb der Datenaufnahme zumindest annähernd auf Null reduzierbar oder kurzfristig abschaltbar ist und dass zumindest für kurze Nutzungsperioden die Laserlichtquelle (3) mit Überstrom betreibbar ist,

7. Konfokales Laserscanmikroskop nach Anspruch 7, **dadurch gekennzeichnet, dass** die Laserlichtquelle (3) eine pulsierende laserlichtquelle ist.

8. Konfokales Laserscanmikroskop nach Anspruch 8, **dadurch gekennzeichnet, dass** die Strahlnutzzeit mit dem Emissionszyklus der Laserlichtquelle (3) synchronisiert ist.

9. Konfokales Laserscanmikroskop nach Anspruch 7, **dadurch gekennzeichnet, dass** ein Scanner (1) vorgesehen ist, der ein Synchronisationssignal zur Verfügung stellt, das das Netzteil (2) steuert.

## Claims

1. Method for operating a laser light source (3) in a confocal laser scanning microscope, the laser light source (3) being supplied with current by means of a power supply unit (2), **characterized in that** the laser power of the laser light source (3) is reduced approximately to zero or is temporarily switched off during the time outside the data acquisition, and **in that** the laser light source (3) is operated with an excess current at least for short periods of use.

2. Method according to Claim 1, **characterized in that** the laser light source (3) is a pulsed laser light source, which has an emission cycle.

3. Method according to Claim 2, **characterized in that** the data acquisition time is synchronized with the emission cycle of the laser light source (3).

4. Method according to Claim 1, **characterized in that** the data acquisition time involves meandering line cycles (5), and **in that** the data acquisition takes place in every n^{th} line.

5. Method according to Claim 3, **characterized in that** a scanner (1) that provides a synchronization signal, which controls the power supply unit (2), is provided.

6. Confocal laser scanning microscope having a laser light source (3), a scanner (1) and a power supply unit (2), the laser light source (3) being supplied with current by means of a power supply unit (2), **characterized in that** the laser power of the laser light source (3) can be reduced approximately to zero or can be temporarily switched off during the time outside the data acquisition, and **in that** the laser light source (3) can be operated with an excess current at least for short periods of use.

7. Confocal laser scanning microscope according to Claim 7, **characterized in that** the laser light source (3) is a pulsed laser light source, which has an emission cycle.

8. Confocal laser scanning microscope according to Claim 8, **characterized in that** the beam utilization time is synchronized with the emission cycle of the laser light source (3).

9. Confocal laser scanning microscope according to Claim 7, **characterized in that** a scanner (1) that provides a synchronization signal, which controls the power supply unit (2), is provided.

## Revendications

1. Procédé pour faire fonctionner une source de lumière laser (3) dans un microscope à balayage laser à foyer commun, la source de lumière laser (3) étant alimentée en électricité par le biais d'une alimentation secteur (2), **caractérisé en ce que** la puissance du laser de la source de lumière laser (3) est réduite pratiquement à zéro ou brièvement désactivée pendant la période en dehors de la collecte de données et que la source de lumière laser (3) fonctionne ec une surintensité au moins pendant des périodes d'utilisation courtes.

2. Procédé selon la revendication 1, **caractérisé en ce que** la source de lumière laser (3) est une source de lumière laser pulsée qui présente un cycle d'émission.

3. Procédé selon la revendication 2, **caractérisé en ce que** la durée de la collecte de données est synchronisée avec le cycle d'émission de la source de lumière laser (3).

4. Procédé selon la revendication 1, **caractérisé en ce que** la durée de collecte de données comprend des cycles de lignes en forme de méandres (5) et que la collecte de données a lieu chaque nième ligne.

5. Procédé selon la revendication 3, **caractérisé en ce qu'**il est prévu un scanner (1) qui délivre un signal de synchronisation qui commande l' alimentation secteur (2).

6. Microscope à balayage laser à foyer commun équipé d'une source de lumière laser (3), d'un scanner (1) et d'une alimentation secteur (2), là source de lumière laser (3) étant alimentée en électricité par le biais d'une alimentation secteur (2), **caractérisé en ce que** la puissance du laser de la source de lumière laser (3) peut au moins être réduite pratiquement à zéro ou peut être brièvement 'désactivée pendant la période en dehors de la collecte de données et que la source de lumière laser (3) peut fonctionner avec une surintensité au moins pendant des périodes d'utilisation courtes.

7. Microscope à balayage laser à foyer commun selon la revendication 7, **caractérisé en ce que** la source de lumière laser (3) est une source de lumière laser pulsée.

8. Microscope à balayage laser à foyer commun selon la revendication 8, **caractérisé en ce que** le temps utile du rayon est synchronisé avec le cycle d'émission de la source de lumière laser (3).

9. Microscope à balayage laser à foyer commun selon la revendication 7, **caractérisé en ce qu'**il est prévu un scanner (1) qui délivre un signal de synchronisation qui commande l'alimentation secteur (2).
